# EUROPEAN PATENT APPLICATION

(11) **EP 4 745 070 A1**
(43) Date of publication of application: **20.05.2026**
(21) Application number: 24870223.5
(22) Date of filing: 20.08.2024
(51) Int. Cl.: B65H 16/02, H01M 10/0587

(54) **WINDING MECHANISM AND WINDING DEVICE**

(30) Priority: 28.09.2023 CN 202311272650
(71) Applicant: Contemporary Amperex Technology Co., Limited, Ningde, Fujian 352100 (CN)
(72) Inventor: LI, Cong, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN)
(74) Representative: Kraus & Lederer PartGmbB
(86) International application number: PCT/CN2024/113411
(87) International publication number: WO 2025/066677

(57) **Abstract**

A winding mechanism (100) and a winding device. The winding mechanism (100) comprises at least two unwinding mechanisms (20) and a first clamping assembly (10). Each unwinding mechanism (20) is configured to implement electrode sheet unwinding transmission and can independently convey an electrode sheet, the unwinding mechanism (20) comprises an electrode sheet starting end (20a) and an electrode sheet free end (20b), and the first clamping assembly (10) is configured to allow the electrode sheet free end (20b) of any of the unwinding mechanisms (20) to be conveyed the next procedure. Each unwinding mechanism (20) of the winding mechanism (100) can independently work, and the electrode sheet free end (20b) of each unwinding mechanism (20) is conveyed to the next procedure by means of the first clamping assembly (10).

## Description

The present disclosure claims the priority to Chinese Patent Application No. 202311272650.7, filed with the China National Intellectual Property Administration on September 28, 2023 and entitled "WINDING MECHANISM AND WINDING DEVICE", which is incorporated herein by reference in its entirety.

### TECHNICAL FIELD

The present disclosure relates to the technical field of battery electrode sheet processing, and particularly provides a winding mechanism and a winding device having the winding mechanism.

### BACKGROUND

An electrode assembly is formed by winding a positive electrode sheet, a separator, and a negative electrode sheet together. Typically, the wound electrode sheets and separator are disposed on a winding mechanism, and are pressed by composite rollers to form an integrated sheet-like structure.

Before the positive electrode sheet and the negative electrode sheet are subjected to pressing and winding, performance testing needs to be performed, and electrode sheet segments that fail the performance test are removed. To this end, a rejection mechanism is provided in the winding mechanism for removing electrode sheets with unqualified performance.

However, during the rejection process, the winding mechanism needs to stop unwinding, which leads to low production efficiency of the electrode assembly.

### TECHNICAL PROBLEM

A purpose of the present disclosure is to provide a winding mechanism and a winding device, aiming to address the problem that an existing winding mechanism needs to stop operation during rejection, leading to low production efficiency of electrode assemblies.

### TECHNICAL SOLUTION

To achieve the above purpose, the technical solution adopted by the present disclosure is as follows.

According to a first aspect, the present disclosure provides a winding mechanism, including:
at least two sets of unwinding mechanisms, where the unwinding mechanism is configured to unwind and convey an electrode sheet and is capable of independently conveying the electrode sheet, and the unwinding mechanism includes an electrode sheet starting end and an electrode sheet free end opposite to the electrode sheet starting end; and
a first clamping assembly, the first clamping assembly being configured to enable the electrode sheet free end of any one of the unwinding mechanisms to be conveyed to a next process.

Beneficial effects of the present disclosure: The winding mechanism provided by the present disclosure includes at least two sets of unwinding mechanisms and a first clamping assembly. Each set of unwinding mechanism can operate independently, and the electrode sheet free end of each unwinding mechanism is conveyed to a next process through the first clamping assembly. In this way, once the electrode sheet on any one of the unwinding mechanisms undergoes rejection due to failing inspection, and unwinding is stopped, the remaining unwinding mechanisms can continue unwinding to maintain continuous output of the electrode sheet. As a result, the entire electrode assembly production process can be carried out continuously, achieving higher production efficiency.

In some embodiments, the winding mechanism further includes a linkage mechanism, the linkage mechanism being configured to switchably convey the electrode sheet free end of any one of the unwinding mechanisms to the first clamping assembly.

By adopting the above technical solution, the linkage mechanism is configured to switchably convey the electrode sheet free end of any one of the unwinding mechanisms to the first clamping assembly, which is suitable for sequentially outputting the electrode sheet free ends of each unwinding mechanism in a predetermined order.

In some embodiments, the linkage mechanism includes a first guide roller and a second guide roller that are oppositely arranged, and the first guide roller and the second guide roller are each independently movable toward or away from the first clamping assembly to convey the electrode sheet free end of a corresponding unwinding mechanism to the first clamping assembly.

By adopting the above technical solution, the first guide roller and the second guide roller each independently move toward or away from the first clamping assembly, thereby conveying the electrode sheet free end of the unwinding mechanism whose electrode sheet has passed inspection to the first clamping assembly.

In some embodiments, the first clamping assembly includes two first clamping plates that are oppositely arranged, and the two first clamping plates are movable toward or away from each other to clamp the electrode sheet.

By adopting the above technical solution, the two first clamping plates clamp the electrode sheet of the corresponding unwinding mechanism.

In some embodiments, the unwinding mechanism includes a starting roller, an inspection mechanism, a clamping roller, and a rejection mechanism that are sequentially arranged along an electrode sheet conveying path, and the electrode sheet is unwound by the starting roller and conveyed through the inspection mechanism, the clamping roller, and the rejection mechanism.

By adopting the above technical solution, the starting roller is configured to wind an electrode sheet and unwind the electrode sheet under the action of external pulling force; the inspection mechanism is configured to test electrical performance of the electrode sheet; the clamping roller is configured to position and clamp the electrode sheet; and the rejection mechanism is configured to remove unqualified electrode sheets on the conveying path.

In some embodiments, the unwinding mechanism further includes a metering roller located at a subsequent process position relative to the inspection mechanism.

By adopting the above technical solution, the metering roller is configured to measure the length of the unwound electrode sheet to achieve accurate measurement of unqualified electrode sheets.

In some embodiments, the unwinding mechanism further includes a buffer mechanism, and the buffer mechanism is configured to retain electrode sheets that have passed inspection for clamping by the first clamping assembly.

By adopting the above technical solution, the buffer mechanism can effectively retain qualified electrode sheets, facilitating uninterrupted winding in subsequent processes and greatly improving winding efficiency.

In some embodiments, the buffer mechanism includes a plurality of deflection rollers, and the electrode sheet is sequentially wound around each of the deflection rollers.

In some embodiments, the rejection mechanism includes a second clamping assembly, a cutting assembly, and a single winding roller that are sequentially arranged along the electrode sheet conveying path.

By adopting the above technical solution, the cutting assembly performs a first cutting on an unqualified electrode sheet; the clamping assembly clamps a starting position of the unqualified electrode sheet and moves the same toward the single winding roller, and the single winding roller winds the unqualified electrode sheet. During the winding process, the cutting assembly performs a second cutting on the unqualified electrode sheet. The two cutting operations jointly remove the unqualified electrode sheet, and finally all unqualified electrode sheets are wound onto the single winding roller.

**In** some embodiments, the second clamping assembly includes two second clamping plates that are oppositely arranged, and the two second clamping plates are movable toward or away from each other to clamp the electrode sheet.

By adopting the above technical solution, an electrode sheet is between the two second clamping plates and moves toward the single winding roller under the clamping action of the two second clamping plates to wind a cut unqualified electrode sheet onto the single winding roller.

**In** some embodiments, the cutting assembly includes a cutting blade and an abutting member that are located on opposite sides of the electrode sheet, and the cutting blade is movable toward the abutting member.

By adopting the above technical solution, when the cutting blade moves toward the abutting member, the electrode sheet is cut for clamping by the clamping assembly.

In some embodiments, the single winding roller includes two sub-roller bodies that are oppositely arranged and define a gap therebetween, where the two sub-roller bodies are movable toward or away from each other, at least one of the sub-roller bodies is provided with a protruding roller, and the protruding roller is movable away from or toward the corresponding sub-roller body.

By adopting the above technical solution, the gap between the two sub-roller bodies allows an electrode sheet to pass through, and the two sub-roller bodies move toward each other to clamp the electrode sheet, then wind and collect the electrode sheet. Meanwhile, during electrode sheet winding, the protruding roller is in an extended state, moving outward away from the sub-roller body, such that a winding radius of the electrode sheet is increased, thereby increasing, to a certain extent, a rotational speed of the single winding roller. Further, in removing the electrode sheet, the protruding roller is in a retracted state, moving inward toward the sub-roller body, such that a gap between the electrode sheet and each sub-roller body is enlarged, thereby facilitating the removal of the electrode sheet from the single winding roller.

According to a second aspect, an embodiment of the present disclosure further provides a winding device, including the winding mechanism described above.

Beneficial effects of the present disclosure: The winding device provided by the present disclosure, on the basis of having the above winding mechanism, has higher winding efficiency.

### BRIEF DESCRIPTION OF DRAWINGS

To more clearly illustrate the technical solutions in the embodiments of the present disclosure, the drawings to be used in the description of the embodiments or the prior art will be briefly introduced below. Obviously, the drawings described below are only some embodiments of the present disclosure. For those of ordinary skill in the art, other drawings can also be obtained based on these drawings without creative effort.
FIG. 1 is a schematic structural diagram of a winding mechanism in an initial state according to an embodiment of the present disclosure;
FIG. 2 is a schematic structural diagram of a winding mechanism in a first operating state according to an embodiment of the present disclosure;
FIG. 3 is a schematic structural diagram of a winding mechanism in a second operating state according to an embodiment of the present disclosure;
FIG. 4 is a schematic structural diagram of a winding mechanism in a third operating state according to an embodiment of the present disclosure;
FIG. 5 is a schematic structural diagram of the winding mechanism in a fourth operating state according to an embodiment of the present disclosure;
FIG. 6 is a schematic structural diagram of a winding mechanism in a fifth operating state according to an embodiment of the present disclosure; and
FIG. 7 is a cross-sectional view of a winding mechanism according to an embodiment of the present disclosure.

Reference signs in the figures:
100. winding mechanism;
10. first clamping assembly; 11. first clamping plate;
20. unwinding mechanism; 20a. electrode sheet starting end; 20b. electrode sheet free end; 21. starting roller; 22. inspection mechanism; 23. metering roller; 24. buffer mechanism; 25. clamping roller; 26. rejection mechanism; 241. deflection roller; 261. second clamping assembly; 262. cutting assembly; 263. single winding roller; 2611. second clamping plate; 2621. cutting blade; 2622. abutting member; 2631. sub-roller body; 2632. protruding roller;
30. linkage mechanism; 31. first guide roller; and 32. second guide roller.

### DESCRIPTION OF EMBODIMENTS

The embodiments of the present disclosure are described in detail below, examples of which are illustrated in the accompanying drawings, where like or similar reference numerals refer to like or similar elements or elements having the same or similar functions throughout. The embodiments described below with reference to the drawings are exemplary and are intended to explain the present disclosure, and should not be construed as limiting the present disclosure.

In the description of the present disclosure, it should be understood that the orientations or positional relationships indicated by terms such as "length", "width", "upper", "lower", "front", "rear", "left", "right", "perpendicular", "horizontal", "top", "bottom", "inside", "outside", and the like are based on the orientations or positional relationships shown in the drawings, and are only for facilitating the description of the present disclosure and simplifying the description, rather than indicating or implying that the referred device or element must have a specific orientation, be constructed and operated in a specific orientation, and therefore should not be construed as limiting the present disclosure.

In addition, the terms "first" and "second" are used for descriptive purposes only and should not be understood as indicating or implying relative importance or implicitly specifying the number of technical features indicated. Thus, a feature limited by "first" and "second" may explicitly or implicitly include one or more of these features. In the description of the present disclosure, the meaning of "plurality" is two or more unless otherwise specifically defined and limited.

In the present disclosure, unless otherwise clearly specified and limited, terms such as "mounting", "interconnection", "connection", and "fixation" should be broadly understood. For example, the connection may be a fixed connection, removable connection or integral connection; may be a mechanical connection or electrical connection; may be a direct connection or indirect connection using a medium; and may be a communication or interaction between two elements. Those of ordinary skill in the art may understand specific meanings of the above terms in the present disclosure based on a specific situation.

An electrode assembly is formed by winding a positive electrode sheet, a separator, and a negative electrode sheet, during which a winding device is required. The positive electrode sheet, separator, and negative electrode sheet are unwound separately, pressed to form an integrated body, and then wound into a bundle using a mandrel. The positive electrode sheet and negative electrode sheet are each provided with an independent feeding mechanism to supply materials for the manufacture of the electrode assembly. Furthermore, to improve the yield rate of the electrode assembly, electrical performance of incoming electrode sheets is electrically tested during the feeding process. Once an unqualified electrode sheet appears, the unqualified electrode sheet needs to be subjected to rejection from the conveying path, which causes the entire electrode sheet conveying process to be in a stopped state, the incoming electrode sheets to suspend feeding, and winding of the electrode assembly to be passively suspended, thereby greatly affecting production efficiency of the electrode assembly.

In view of this, to improve production efficiency of the electrode assembly, an embodiment of the present disclosure provides a winding mechanism. The winding mechanism includes at least two sets of unwinding mechanisms capable of implementing independent unwinding of electrode sheets. This ensures uninterrupted output of electrode sheets to the first clamping assembly, and the electrode sheet are then conveyed by the first clamping assembly to the next process. In this way, continuous winding of the electrode assembly without downtime is achieved.

A battery cell includes a housing, an electrode assembly, and an electrolyte, where the electrode assembly is the component in the battery cell where electrochemical reactions occur. The housing may contain one or more electrode assemblies. The electrode assembly is mainly formed by winding a positive electrode sheet and a negative electrode sheet, and a separator is usually provided between the positive electrode sheet and the negative electrode sheet. Portions of the positive electrode sheet and negative electrode sheet having active materials constitute a main body of an electrode assembly, and portions of the positive electrode sheet and negative electrode sheet without active materials each constitute tabs. The positive electrode tab and negative electrode tab may be located together at one end of the main body or separately at two opposite ends of the main body. During charging and discharging process of a battery, the positive active material and the negative active material react with the electrolyte, and the tabs are connected to electrode terminals to form a current loop.

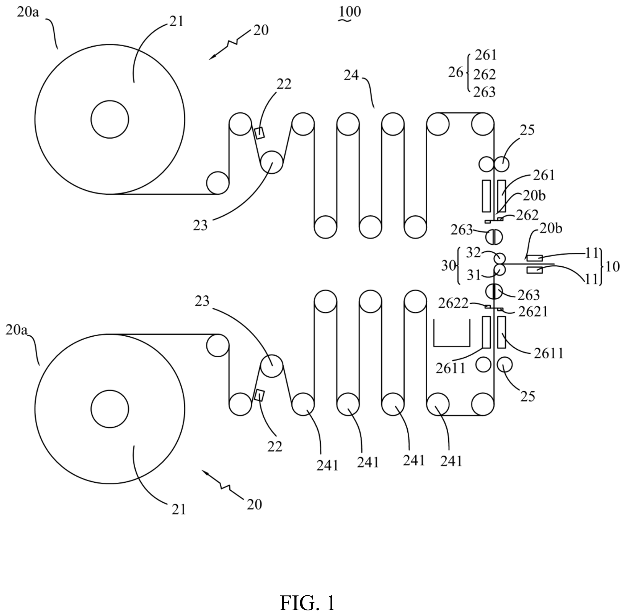

Referring to FIG. 1, according to a first aspect, the present disclosure provides a winding mechanism 100, including at least two sets of unwinding mechanisms 20 and a first clamping assembly 10.

The unwinding mechanism 20 is configured to unwind and convey an electrode sheet, and the unwinding mechanism 20 includes an electrode sheet starting end 20a and an electrode sheet free end 20b opposite to the electrode sheet starting end 20a.

The first clamping assembly 10 is configured to enable the electrode sheet free end 20b of any one of the unwinding mechanisms 20 to be conveyed to a next process.

It can be understood that two or more unwinding mechanisms 20 are included, and each unwinding mechanism 20 can unwind independently, that is, the unwinding actions of each unwinding mechanism 20 do not interfere with or affect each other.

An electrode sheet starting end 20a is a starting position for unwinding the electrode sheet, and an electrode sheet free end 20b is a position for electrode sheet conveyance, that is, an end of the electrode sheet before entering the first clamping assembly 10.

The first clamping assembly 10 plays a role of collecting to ensure that the electrode sheet free end 20b of at least one unwinding mechanism 20 is conveyed from the first clamping assembly 10 to a next process.

In this way, the electrode sheet free ends 20b of each unwinding mechanism 20 may alternately perform unwinding conveyance to the first clamping assembly 10. For example, when the electrode sheet free end 20b of one unwinding mechanism 20 is feeding at the first clamping assembly 10, the remaining unwinding mechanisms 20 stop feeding. Once the electrode sheet of the current unwinding mechanism 20 is detected as unqualified and the feeding is stopped, any one of the remaining unwinding mechanisms 20 substitutes to perform feeding to maintain continuous electrode sheet conveyance from the first clamping assembly 10 to a next process. In a similar manner, once the current unwinding mechanism 20 stops feeding, a remaining unwinding mechanism 20 substitutes for unwinding.

By way of example, the number of unwinding mechanisms 20 is two, and the two unwinding mechanisms 20 are arranged side by side, the electrode sheet free ends 20b of each unwinding mechanism 20 extend in the same direction toward the first clamping assembly 10, and alternately convey electrode sheets to the first clamping assembly 10.

By way of example, the number of unwinding mechanisms 20 is three, the conveying directions of the electrode sheet free ends 20b of the three unwinding mechanisms 20 are arranged at included angles relative to each other, and the electrode sheet free ends 20b of each unwinding mechanism 20 also alternately convey electrode sheets to the first clamping assembly 10.

The winding mechanism 100 provided by the present disclosure includes at least two sets of unwinding mechanisms 20 and a first clamping assembly 10. Each set of unwinding mechanism 20 can operate independently, and the electrode sheet free end 20b of each unwinding mechanism 20 is conveyed to a next process through the first clamping assembly 10. In this way, once the electrode sheet on any one of the unwinding mechanisms 20 undergoes rejection due to failing inspection, and the unwinding is stopped, the remaining unwinding mechanisms 20 can continue unwinding to maintain continuous output of electrode sheets. As a result, the entire electrode assembly production process can be carried out continuously, achieving higher production efficiency.

Referring to FIG. 1, in some embodiments, the winding mechanism 100 further includes a linkage mechanism 30, the linkage mechanism 30 being configured to switchably convey the electrode sheet free end 20b of any one of the unwinding mechanisms 20 to the first clamping assembly 10.

It can be understood that the electrode sheet free ends 20b of respective unwinding mechanisms 20 may be alternately conveyed to the first clamping assembly 10 in a manual manner, or may be alternately conveyed to the first clamping assembly 10 in an automated manner. Accordingly, the linkage mechanism 30 is configured to automatically switchably convey the electrode sheet free end 20b of any one of the unwinding mechanisms 20 to the first clamping assembly 10.

By way of example, the linkage mechanism 30 includes a plurality of mechanical clamping arms, each mechanical clamping arm corresponding to the electrode sheet free end 20b of one unwinding mechanism 20, and the mechanical clamping arms can clamp the corresponding electrode sheet free end 20b of the unwinding mechanism 20 to the first clamping assembly 10.

By way of example, the linkage mechanism 30 includes a plurality of adjacently arranged guide rollers. Each guide roller is movable toward or away from each other, the electrode sheet free end 20b of each unwinding mechanism 20 is clamped between two of the guide rollers, and the two adjacent guide rollers clamp and convey the electrode sheet free end 20b of the current unwinding mechanism 20 to the first clamping assembly 10.

In this way, the linkage mechanism 30 is configured to switchably convey the electrode sheet free end 20b of any one of the unwinding mechanisms 20 to the first clamping assembly 10, which is suitable for sequentially outputting the electrode sheet free ends 20b of each unwinding mechanism 20 in a predetermined order.

Referring to FIG. 1, in some embodiments, the linkage mechanism 30 includes a first guide roller 31 and a second guide roller 32 that are oppositely arranged, and the first guide roller 31 and the second guide roller 32 are each independently movable toward or away from the first clamping assembly 10 to convey the electrode sheet free end 20b of a corresponding unwinding mechanism 20 to the first clamping assembly 10.

It can be understood that the electrode sheet free ends 20b of respective unwinding mechanisms 20 can be clamped by the first guide roller 31 and the second guide roller 32 and be conveyed to the first clamping assembly 10. Furthermore, when it is required to switch to the electrode sheet free end 20b of another unwinding mechanism 20, the first guide roller 31 or the second guide roller 32 moves away from the first clamping assembly 10 to form a clamping gap, and the electrode sheet free end 20b of the other unwinding mechanism 20 is conveyed to extend into the gap to establish a clamped state. Thereafter, the electrode sheet free end 20b of the unwinding mechanism 20 is conveyed to the first clamping assembly 10.

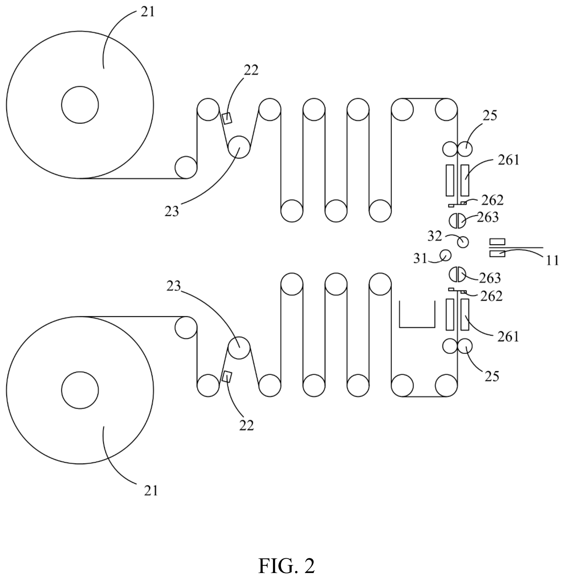

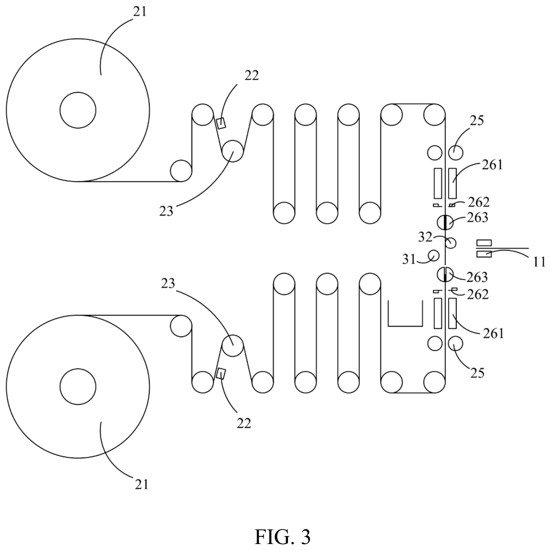

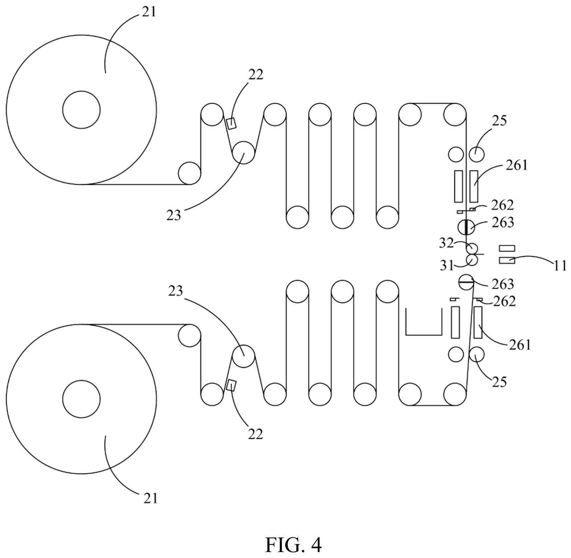

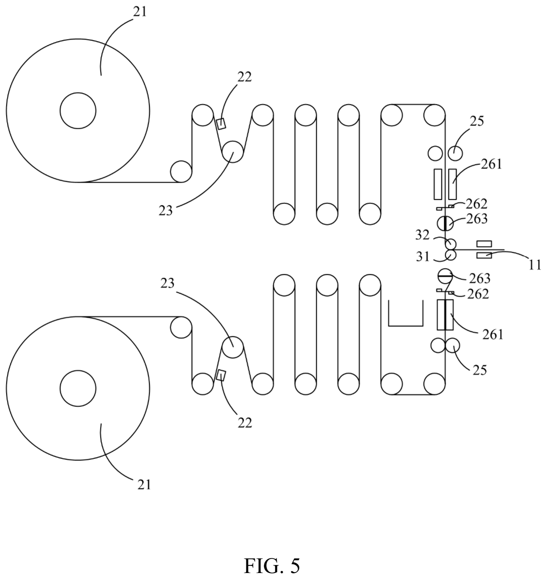

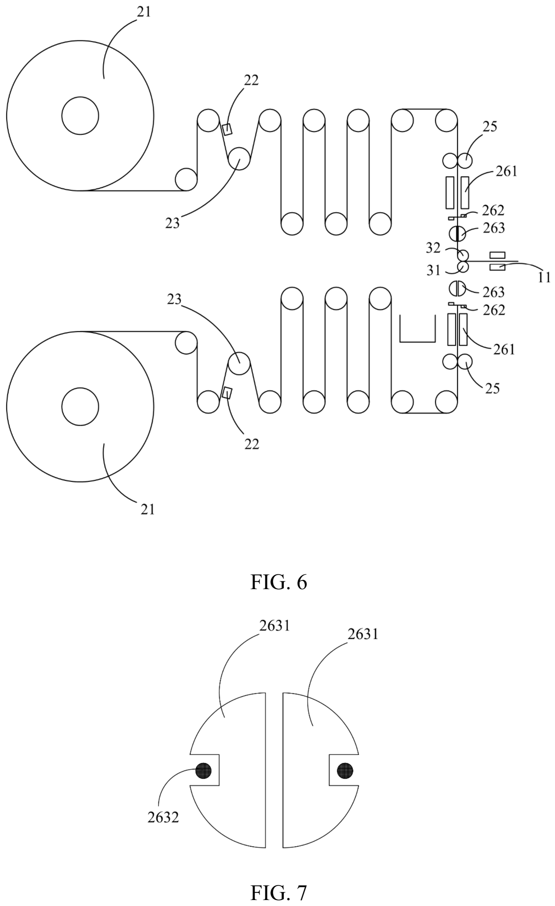

By way of example, as shown in FIG. 1 to FIG. 6, FIG. 1 is a schematic structural diagram of a winding mechanism in an initial state according to an embodiment of the present disclosure, where in the initial state, one unwinding mechanism of the winding mechanisms normally conveys electrode sheets; FIG. 2 is a schematic structural diagram of a winding mechanism in a first operating state according to an embodiment of the present disclosure, where in the first operating state, the presence of an unqualified electrode sheet in one of the unwinding mechanisms is detected; FIG. 3 is a schematic structural diagram of a winding mechanism in a second operating state according to an embodiment of the present disclosure, where in the second operating state, an electrode sheet of another unwinding mechanism substitutes for feeding; FIG. 4 is a schematic structural diagram of a winding mechanism in a third operating state according to an embodiment of the present disclosure, where in the third operating state, the other unwinding mechanism completes feeding; FIG. 5 is a schematic structural diagram of a winding mechanism in a fourth operating state according to an embodiment of the present disclosure, where in the fourth operating state, an unwinding mechanism having an unqualified electrode sheet performs singleroll collection of a defective product; and FIG. 6 is a schematic structural diagram of a winding mechanism in a fifth operating state according to an embodiment of the present disclosure, where in the fifth operating state, an unwinding mechanism having an unqualified electrode sheet waits again to be replaced for feeding. Two unwinding mechanisms 20 are arranged side by side. In an initial stage, an electrode sheet free end 20b of one unwinding mechanism 20 is clamped between the first guide roller 31 and the second guide roller 32 and is conveyed to the first clamping assembly 10, while an electrode sheet free end 20b of the other unwinding mechanism 20 is in a waiting state. When an unqualified electrode sheet appears in the current unwinding mechanism 20, the first guide roller 31 and the second guide roller 32 are displaced relative to each other to allow the unqualified electrode sheet of the current unwinding mechanism 20 to be wound and collected. Meanwhile, the electrode sheet free end 20b of the other unwinding mechanism 20 extends into a space between the first guide roller 31 and the second guide roller 32, and the first guide roller 31 and the second guide roller 32 return to a relatively opposite arrangement and convey the electrode sheet to the first clamping assembly 10.

Referring to FIG. 1, in some embodiments, the first clamping assembly 10 includes two first clamping plates 11 that are oppositely arranged, and the two first clamping plates 11 are movable toward or away from each other to clamp the electrode sheet.

In forming the clamping action, one of the two first clamping plates 11 moves toward the other; or the two first clamping plates 11 move toward each other. Therefore, a mechanism or device for providing a clamping force may be configured for one of the two first clamping plates 11 or may be respectively configured for both clamping plates according to actual usage needs.

Referring to FIG. 1, in some embodiments, the unwinding mechanism 20 includes a starting roller 21, an inspection mechanism 22, a clamping roller 25, and a rejection mechanism 26 that are sequentially arranged along an electrode sheet conveying path, and the electrode sheet is unwound by the starting roller 21 and conveyed through the inspection mechanism 22, the clamping roller 25, and the rejection mechanism 26.

It can be understood that the starting roller 21 is configured to wind an electrode sheet and unwind the electrode sheet under the action of external pulling force; the inspection mechanism 22 is configured to test electrical performance of the electrode sheet; the clamping roller 25 is configured to position and clamp the electrode sheet; and the rejection mechanism 26 is configured to remove unqualified electrode sheets on the conveying path.

Referring to FIG. 1, in some embodiments, the unwinding mechanism 20 further includes a metering roller 23 located at a subsequent process position relative to the inspection mechanism 22.

The metering roller 23 is configured to measure the length of the unwound electrode sheet to achieve accurate measurement of unqualified electrode sheets.

The metering roller 23 is a roller body with a determined and known outer diameter, and the length of the electrode sheet conveyed downstream is calculated by winding the electrode sheet around one-quarter or one-half of the circumference of the metering roller 23.

Referring to FIG. 1, in some embodiments, the unwinding mechanism 20 further includes a buffer mechanism 24, and the buffer mechanism 24 is configured to retain electrode sheets that have passed inspection for clamping by the first clamping assembly 10.

The buffer mechanism 24 may include a plurality of single rollers. The single rollers are alternately arranged along the conveying direction, and the electrode sheet is sequentially wound around each of the single rollers to accumulate a certain amount of qualified electrode sheets between the first single roller and the last single roller.

In this way, the buffer mechanism 24 can effectively retain qualified electrode sheets, facilitating uninterrupted winding in subsequent processes and greatly improving winding efficiency.

Specifically, referring to FIG. 1, in a specific embodiment, the buffer mechanism 24 includes a plurality of deflection rollers 241, and the electrode sheet is sequentially wound around each of the deflection roller 241.

Each of the deflection rollers 241 is alternately arranged along the conveying direction, and the electrode sheet is sequentially wound around each of the deflection rollers 241 to accumulate a certain length of qualified electrode sheets between the first deflection roller 241 and the last deflection roller 241.

Referring to FIG. 1, in some embodiments, the rejection mechanism 26 includes a second clamping assembly 261, a cutting assembly 262, and a single winding roller 263 that are sequentially arranged along the electrode sheet conveying path.

The second clamping assembly 261 has two process actions: one is a clamping action to clamp a cut-off electrode sheet, and the other is a pushing action to push the clamped electrode sheet to the single winding roller 263.

Therefore, the second clamping assembly 261 may have power mechanisms such as oppositely arranged cylinders and hydraulic cylinders to provide a clamping force, and mechanisms such as screw mechanisms, lifting mechanisms, and reciprocating transmission mechanisms to provide reciprocating movement power.

The cutting assembly 262 is configured to cut off an unqualified electrode sheet to separate the unqualified electrode sheet from the conveying path.

The cutting assembly 262 performs a first cutting on the unqualified electrode sheet, the second clamping assembly 261 clamps a starting position of the unqualified electrode sheet and moves the same toward the single winding roller 263, and the single winding roller 263 winds the unqualified electrode sheet. During the winding process, the cutting assembly 262 performs a second cutting on the unqualified electrode sheet. The two cutting actions exactly remove the unqualified electrode sheet, and finally all unqualified electrode sheets are wound on the single winding roller 263.

In some embodiments, the second clamping assembly 261 includes two second clamping plates 2611 that are oppositely arranged, and the two second clamping plates 2611 are movable toward or away from each other to clamp the electrode sheet.

It can be understood that in forming the clamping action, one of the two second clamping plates 2611 moves toward the other, or both second clamping plates 2611 move toward each other. Therefore, a mechanism or device for providing a clamping force may be configured for one of the second clamping plates 2611 or may be respectively configured for both clamping plates according to actual usage needs.

Furthermore, in the pushing action, the two second clamping plates 2611 can both move toward or away from the single winding roller 263 to push the clamped electrode sheet to the single winding roller 263 for winding by the single winding roller 263.

Specifically, the electrode sheet is conveyed at a position between the two second clamping plates 2611. After the electrode sheet is cut, the two second clamping plates 2611 clamp the cut-off electrode sheet and move it toward the single winding roller 263 to wind the cut unqualified electrode sheet on the single winding roller 263. Thereafter, the two second clamping plates 2611 return to their initial positions after completing the pushing action.

In some embodiments, the cutting assembly 262 includes a cutting blade 2621 and an abutting member 2622 located on opposite sides of the electrode sheet, and the cutting blade 2621 is movable toward the abutting member 2622.

When the cutting blade 2621 moves toward the abutting member 2622, the electrode sheet is cut for clamping by the clamping assembly. Specifically, the cutting blade 2621 performs two cuttings on the unqualified electrode sheet to remove the unqualified electrode sheet from the conveying path.

Referring to FIG. 7, in some embodiments, the single winding roller 263 includes two sub-roller bodies 2631 that are oppositely arranged and define a gap for accommodating the electrode sheet, where the two sub-roller bodies 2631 are movable toward or away from each other, at least one sub-roller body 2631 is provided with a protruding roller 2632, and the protruding roller 2632 is movable away from or toward the corresponding sub-roller body 2631.

In an initial state, the two sub-roller bodies 2631 define a gap therebetween. In a non-winding state, the gap also allows the electrode sheet to pass through to satisfy conveying requirements. When the second clamping assembly 261 clamps the electrode sheet and moves toward the two sub-roller bodies 2631, the two sub-roller bodies 2631 move toward each other, such that the gap is closed to clamp the electrode sheet. Then, with the gap in a closed state, the two sub-roller bodies 2631 wind and collect the electrode sheet.

Meanwhile, during electrode sheet winding, the protruding roller 2632 is in an extended state, moving outward away from the sub-roller body 2631, such that a winding radius of the electrode sheet is increased, thereby increasing, to a certain extent, a rotational speed of the single winding roller 263. Further, in removing the electrode sheet, the protruding roller 2632 is in a retracted state, moving inward toward the sub-roller body 2631, such that a gap between the electrode sheet and each sub-roller body 2631 is enlarged, thereby facilitating the removal of the electrode sheet from the single winding roller 263.

Referring to FIG. 1 to FIG. 7, in a specific embodiment, the winding mechanism 100 includes two unwinding mechanisms 20 arranged side by side, a linkage mechanism 30, and a first clamping assembly 10, and under the action of the linkage mechanism 30, electrode sheet free ends 20b of two unwinding mechanisms 20 are alternately conveyed to the first clamping assembly 10.

Specifically, the first clamping assembly 10 includes two first clamping plates 11 that are oppositely arranged, and the two first clamping plates 11 are movable toward or away from each other to clamp the electrode sheet.

The unwinding mechanism 20 includes a starting roller 21, an inspection mechanism 22, a metering roller 23, a buffer mechanism 24, a clamping roller 25, and a rejection mechanism 26 that are sequentially arranged along an electrode sheet conveying path, and the electrode sheet is unwound by the starting roller 21 and conveyed through the inspection mechanism 22, the metering roller 23, the buffer mechanism 24, the clamping roller 25, and the rejection mechanism 26.

The starting roller 21 is configured to wind an electrode sheet and unwind the electrode sheet under the action of external pulling force; the inspection mechanism 22 is configured to test electrical performance of the electrode sheet; the clamping roller 25 is configured to position and clamp the electrode sheet; and the rejection mechanism 26 is configured to remove unqualified electrode sheets on the conveying path.

The metering roller 23 is configured to measure the length of the unwound electrode sheet to achieve accurate measurement of unqualified electrode sheets. The metering roller 23 is a roller body with a determined and known outer diameter, and the length of the electrode sheet conveyed downstream is calculated by winding the electrode sheet around one-quarter or one-half circumference of the metering roller 23.

The buffer mechanism 24 may include a plurality of deflection rollers 241. The deflection rollers 241 are alternately arranged along the conveying direction, and the electrode sheet is sequentially wound around each of the deflection rollers 241 to accumulate a certain amount of qualified electrode sheets between the first deflection roller 241 and the last deflection roller 241.

The rejection mechanism 26 includes a second clamping assembly 261, a cutting assembly 262, and a single winding roller 263 that are sequentially arranged along the electrode sheet conveying path.

The second clamping assembly 261 has two process actions: one is a clamping action to clamp a cut-off electrode sheet, and the other is a pushing action to push the clamped electrode sheet to the single winding roller 263.

Therefore, the second clamping assembly 261 may have power mechanisms such as oppositely arranged cylinders and hydraulic cylinders to provide a clamping force, and mechanisms such as screw mechanisms, lifting mechanisms, and reciprocating transmission mechanisms to provide reciprocating movement power.

The cutting assembly 262 is configured to cut off an unqualified electrode sheet to separate the unqualified electrode sheet from the conveying path.

The cutting assembly 262 performs a first cutting on the unqualified electrode sheet, the second clamping assembly 261 clamps a starting position of the unqualified electrode sheet and moves the same toward the single winding roller 263, and the single winding roller 263 winds the unqualified electrode sheet. During the winding process, the cutting assembly 262 performs a second cutting on the unqualified electrode sheet. The two cutting actions exactly remove the unqualified electrode sheet, and finally all unqualified electrode sheets are wound on the single winding roller 263.

The second clamping assembly 261 includes two second clamping plates 2611 that are oppositely arranged, and the two second clamping plates 2611 are movable toward or away from each other to clamp the electrode sheet.

The cutting assembly 262 includes a cutting blade 2621 and an abutting member 2622 located on opposite sides of the electrode sheet, and the cutting blade 2621 is movable toward the abutting member 2622.

The single winding roller 263 includes two sub-roller bodies 2631 that are oppositely arranged and define a gap for accommodating the electrode sheet, where the two sub-roller bodies 2631 are movable toward or away from each other, at least one sub-roller body 2631 is provided with a protruding roller 2632, and the protruding roller 2632 is movable away from or toward the corresponding sub-roller body 2631.

In an initial state, the two sub-roller bodies 2631 define a gap therebetween. In a non-winding state, the gap also allows the electrode sheet to pass through to satisfy conveying requirements. When the second clamping assembly 261 clamps the electrode sheet and moves toward the two sub-roller bodies 2631, the two sub-roller bodies 2631 move toward each other, such that the gap is closed to clamp the electrode sheet. Then, with the gap in a closed state, the two sub-roller bodies 2631 wind and collect the electrode sheet.

Meanwhile, during electrode sheet winding, the protruding roller 2632 is in an extended state, moving outward away from the sub-roller body 2631, such that a winding radius of the electrode sheet is increased, thereby increasing, to a certain extent, a rotational speed of the single winding roller 263. Further, in removing the electrode sheet, the protruding roller 2632 is in a retracted state, moving inward toward the sub-roller body 2631, such that a gap between the electrode sheet and each sub-roller body 2631 is enlarged, thereby facilitating the removal of the electrode sheet from the single winding roller 263.

The linkage mechanism 30 includes a first guide roller 31 and a second guide roller 32 that are oppositely arranged, and the first guide roller 31 and the second guide roller 32 are each independently movable toward or away from the first clamping assembly 10 to convey the electrode sheet free end 20b of a corresponding unwinding mechanism 20 to the first clamping assembly 10.

In an initial stage, an electrode sheet free end 20b of one unwinding mechanism 20 is clamped between the first guide roller 31 and the second guide roller 32 and is conveyed to the first clamping assembly 10, while an electrode sheet free end 20b of the other unwinding mechanism 20 is in a waiting state. When an unqualified electrode sheet appears in the current unwinding mechanism 20, the first guide roller 31 and the second guide roller 32 are displaced relative to each other to allow the unqualified electrode sheet of the current unwinding mechanism 20 to be wound and collected. Meanwhile, the electrode sheet free end 20b of the other unwinding mechanism 20 extends into a space between the first guide roller 31 and the second guide roller 32, and the first guide roller 31 and the second guide roller 32 return to a relatively opposite arrangement and convey the electrode sheet to the first clamping assembly 10.

According to a second aspect, an embodiment of the present disclosure further provides a winding device, including the winding mechanism 100 described above.

The winding device provided by the present disclosure, on the basis of having the above winding mechanism 100, has higher winding efficiency.

However, the winding device also includes other mechanism parts, such as a separator winding roller for winding the separator, a pressing roller for laminating the electrode sheet and the separator, and a winding roller for winding the finished electrode assembly.

## Claims

1. A winding mechanism, comprising:
at least two sets of unwinding mechanisms, wherein each of the unwinding mechanisms is configured to unwind and convey an electrode sheet and is capable of independently conveying the electrode sheet, and the unwinding mechanism comprises an electrode sheet starting end and an electrode sheet free end opposite to the electrode sheet starting end; and
a first clamping assembly, the first clamping assembly being configured to enable the electrode sheet free end of any one of the unwinding mechanisms to be conveyed to a next process.

2. The winding mechanism according to claim 1, wherein the winding mechanism further comprises a linkage mechanism, the linkage mechanism being configured to switchably convey the electrode sheet free end of any one of the unwinding mechanisms to the first clamping assembly.

3. The winding mechanism according to claim 2, wherein the linkage mechanism comprises a first guide roller and a second guide roller that are oppositely arranged, and the first guide roller and the second guide roller are each independently movable toward or away from the first clamping assembly to convey the electrode sheet free end of a corresponding unwinding mechanism to the first clamping assembly.

4. The winding mechanism according to claim 1, wherein the first clamping assembly comprises two first clamping plates that are oppositely arranged, and the two first clamping plates are movable toward or away from each other to clamp the electrode sheet.

5. The winding mechanism according to claim 1, wherein the unwinding mechanism comprises a starting roller, an inspection mechanism, a clamping roller, and a rejection mechanism that are sequentially arranged along an electrode sheet conveying path, and the electrode sheet is unwound by the starting roller and conveyed through the inspection mechanism, the clamping roller, and the rejection mechanism.

6. The winding mechanism according to claim 5, wherein the unwinding mechanism further comprises a metering roller located at a subsequent process position relative to the inspection mechanism.

7. The winding mechanism according to claim 5 or 6, wherein the unwinding mechanism further comprises a buffer mechanism, and the buffer mechanism is configured to retain electrode sheets that have passed inspection for clamping by the first clamping assembly.

8. The winding mechanism according to claim 7, wherein the buffer mechanism comprises a plurality of deflection rollers, and the electrode sheet is sequentially wound around each of the deflection rollers.

9. The winding mechanism according to claim 5, wherein the rejection mechanism comprises a second clamping assembly, a cutting assembly, and a single winding roller that are sequentially arranged along the electrode sheet conveying path.

10. The winding mechanism according to claim 9, wherein the second clamping assembly comprises two second clamping plates that are oppositely arranged, and the two second clamping plates are movable toward or away from each other to clamp the electrode sheet.

11. The winding mechanism according to claim 9, wherein the cutting assembly comprises a cutting blade and an abutting member that are located on opposite sides of the electrode sheet, and the cutting blade is movable toward the abutting member.

12. The winding mechanism according to claim 9, wherein the single winding roller comprises two sub-roller bodies that are oppositely arranged and define a gap therebetween, the two sub-roller bodies are movable toward or away from each other, at least one of the sub-roller bodies is provided with a protruding roller, and the protruding roller is movable away from or toward the corresponding sub-roller body.

13. A winding device, comprising the winding mechanism according to any one of claims 1 to 12.
